# EUROPÄISCHE PATENTANMELDUNG

(11) **EP 2 574 964 A2**
(43) Veröffentlichungstag der Anmeldung: **03.04.2013**
(21) Anmeldenummer: 12176118.3
(22) Anmeldetag: 12.07.2012
(51) Int. Cl.: G01V 8/20

(54) **Triggerlichtgitter und Verfahren zur Positionsbestimmung von Behältern**

(30) Priorität: 29.09.2011 DE 102011083757
(71) Anmelder: Krones AG, 93073 Neutraubling (DE)
(72) Erfinder: Dünzinger, Bernhard, 84069 Unterdeggenbach (DE); Piana, Stefan, 93096 Köfering (DE); Gut, Thorsten, 93073 Neutraubling (DE); Schäffer, Helmut, 93173 Wenzenbach (DE)
(74) Vertreter: Grünecker, Kinkeldey, Stockmair & Schwanhäusser

(57) **Zusammenfassung**

Beschrieben werden ein Triggerlichtgitter und ein Verfahren zum Erfassen der Position von Behältern und/oder zur Kontrolle ihrer Ausrichtung auf einer Förderstrecke. Dadurch, dass mehrere bezüglich der Förderstrecke auf unterschiedlichen Höhenniveaus vorgesehene Lichtschranken mit getrennt voneinander ansteuerbaren Lichtquellen und einem gemeinsamen Gehäuse vorgesehen sind sowie eine Triggereinheit zum Erzeugen von Steuersignalen auf Grundlage von Ausgangssignalen der Lichtschranken, können unterschiedliche Behältertypen durch Umprogrammierung des Triggerlichtgitters ohne mechanische Verstellung desselben erfasst werden.

## Beschreibung

Die Erfindung betrifft ein Triggerlichtgitter und ein Verfahren zur Positionsbestimmung von Behältern.

Für die Herstellung von Behältern und/oder das Abfüllen von Produkten in Behälter werden diese üblicherweise in einem kontinuierlichen Produktstrom auf Transporteuren, wie beispielsweise Förderbändern, zu den einzelnen Behandlungsstationen transportiert. Um das Vorhandensein und/oder die Position von Behältern auf Transporteuren festzustellen, können beispielsweise Triggerlichtschranken verwendet werden. Beim Durchfahren der Lichtschranke wird dann ein Triggersignal erzeugt, mit dem ein nachfolgender Behandlungsschritt und/oder eine gezielte Weiterleitung des erkannten Behälters ausgelöst werden kann. Ebenso lässt sich ein Inspektionsvorgang triggern oder feststellen, ob ein Behälter in einer ordnungsgemäßen, insbesondere aufrechten Position transportiert wird.

Beispielsweise ist aus der EP 08 01 289 A2 ein horizontaler Lichtvorhang bekannt, bei dem einzelne Lichtschranken hintereinander in Förderrichtung angeordnet sind, so dass ein Behälter die einzelnen Lichtschranken nacheinander durchläuft. Die Lichtschranken werden mit Hilfe von Lichtleitern, die aus einer gemeinsamen Lichtquelle gespeist werden, und zugeordneten Empfängereinheiten gebildet. Die Lichtschranken detektieren in der Höhe des Mündungsbereichs des jeweiligen Behältertyps, um hintereinander einlaufende Behälter zuverlässig unterscheiden zu können. Nachteilig an dieser Anordnung ist jedoch, dass sie auf eine bestimmte Messhöhe und damit auf eine bestimmte Messaufgabe und einen bestimmten Behältertyp beschränkt ist.

Aus der DE 43 05 559 A1 ist ein vertikaler Lichtvorhang bekannt, bei dem eine zeilenartige Anordnung von Lichtsendern auf der einen Seite eines Förderbands angeordnet ist sowie eine entsprechende Empfängerzeile auf der gegenüberliegenden Seite des Förderbands. Einzelne, in Förderrichtung hintereinander angeordnete Lichtschranken sind ferner vorgesehen, um die Transportgeschwindigkeit des Transportbandes und der darauf stehenden Behälter zu ermitteln. Durch wiederholtes Ansteuern der Lichtsender wird ein den Lichtvorhang durchlaufender Behälter spaltenweise abgescannt, um ein Konturraster des Behälters unter Berücksichtigung der ermittelten Fördergeschwindigkeit zu erstellen. Es handelt sich somit um ein grob auflösendes Bild gebendes Verfahren, wobei abgedunkelte Lichtschrankensegmente jeweils dem Behälter zugeordnete Bildpunkte erzeugen. Durch Vergleich dieser Bildpunkte mit eingelernten Vergleichsbildern lassen sich unterschiedliche Behältertypen anhand ihrer Konturen voneinander unterscheiden. Nachteilig an diesem Verfahren ist jedoch, dass eine vergleichsweise große Anzahl von Bildpunkten ausgewertet werden muss, so dass die Geschwindigkeit des Verfahrens dadurch begrenzt ist. Außerdem müssen die Behälter mit einem gewissen Mindestabstand zueinander abgescannt werden, wodurch die Maschinenleistung zusätzlich eingeschränkt wird.

Vertikale oder schräg stehende Lichtgitter sind ferner aus der Sicherheitstechnik bekannt, beispielsweise aus der DE 103 29 881 A1 und der DE 10 2005 030 829 B4, um Objekte, wie beispielsweise Karosserien, und/oder Personen auf Förderbändern zu erkennen oder zu unterscheiden. Zu diesem Zweck werden Lichtvorhänge quer zur Transportrichtung eines Förderbands aufgespannt, wobei üblicherweise Lichtquellen in mehreren Lichtschrankenebenen übereinander gleichzeitig betrieben werden und bei einer unzulässigen Lichtabschwächung in einer oder mehreren der Lichtschrankenebenen ein Steuersignal produziert wird, beispielsweise um die Produktionsanlage aus Sicherheitsgründen abzuschalten. Aufgrund der bei derartigen Produktionsvorgängen vergleichsweise langsamen Fördergeschwindigkeit und den vergleichsweise großen Abmessungen der zu überwachenden Gegenstände oder Personen kann eine Vielzahl von Lichtschrankenebenen problemlos übereinander angeordnet und gemeinsam ausgewertet werden.

In Abfüllanlagen muss dagegen die Position von Behältern mit unterschiedlichen Formen und Größen bei vergleichsweise hohen Transportgeschwindigkeiten zuverlässig erkannt werden, um geeignete Steuersignale für nachfolgend Produktionsschritte erzeugen zu können. Für die Überwachung einer sortenreinen Produktion werden dann beispielsweise höhenverstellbare Lichtschranken vorgesehen, die auf den jeweiligen Behältertyp einzustellen sind. Für Produktwechsel sind folglich Verstellmechanismen nötig, wodurch zusätzlicher Arbeitsaufwand für den Betrieb und die Instandhaltung entsteht. Weitere Nachteile sind die Gefahr von Bedienungsfehlern, die nur eingeschränkte Wiederholbarkeit aufgrund mechanischer Hysterese-Effekte und ein mechanischer Verschleiß des Verstellmechanismus.

Demgegenüber werden bei nicht sortenreiner Produktverarbeitung üblicherweise mehrere Triggerlichtschranken auf unterschiedlichen Höhen miteinander kombiniert. Aufgrund der vergleichsweise großen Abmessungen der einzelnen Lichtschrankenmodule und der dann notwendigen Zusammenführung einzelner Steuerungen lässt sich eine nicht sortenreine Produktionslinie jedoch nur mit Einschränkungen auf diese Weise überwachen. Beispielsweise können die Lichtschrankenmodule in einem für die Positionserkennung besonders wichtigen Halsbereich der Behälter nicht mit der gewünschten vertikalen Auflösung übereinander angeordnet werden, um die Position unterschiedlicher Behältertypen mit ausreichender Zuverlässigkeit und Flexibilität bestimmen zu können.

Es besteht daher der Bedarf für ein Triggerlichtgitter und ein entsprechendes Verfahren zum Erfassen der Position von Behältern mit einer gegenüber dem Stand der Technik verbesserten Zuverlässigkeit und Flexibilität hinsichtlich unterschiedlicher Messaufgaben und Behältertypen.

Die gestellte Aufgabe wird mit einem Triggerlichtgitter nach Anspruch 1 gelöst. Dieses umfasst demnach mehrere bezüglich der Förderstrecke auf unterschiedlichen Höhenniveaus vorgesehene Lichtschranken mit Lichtquellen, die getrennt voneinander ansteuerbar und in einem gemeinsamen Gehäuse untergebracht sind. Dadurch kann ein kompaktes Lichtgitter mit einer besonders hohen vertikalen Auflösung bereitgestellt werden. Ferner ermöglicht die getrennte Ansteuerbarkeit der Lichtquellen die Auswahl unterschiedlicher vertikaler Lichtschrankenbereiche, um bestimmte Messaufgaben zu lösen. Beispielsweise kann der Halsbereich eines Behälters je nach Form und Größe des einlaufenden Behältertyps gezielt vermessen werden, um eine Position des Behälters im Produktstrom zu ermitteln. Ebenso kann ein Seitenwandbereich des Behälters gezielt vermessen werden, um einen maximalen Durchmesser des Behälters zu bestimmen. Ebenso können Messsignale aus unterschiedlichen Höhenniveaus gleichzeitig erfasst und miteinander verglichen werden, um beispielsweise eine ordnungsgemäße stehende Position des Behälters von einer nicht ordnungsgemäßen liegenden Position zu unterscheiden.

Ferner ist eine Triggereinheit zum Erzeugen von Steuersignalen auf Grundlage von Ausgangssignalen der Lichtschranken vorgesehen. Es können somit insbesondere einzelnen Behältern zugeordnete Steuersignale erzeugt werden. Damit kann beispielsweise eine nachfolgende Inspektion an den Behältertyp angepasst werden, der Behälter gezielt weitergeleitet werden und/oder der Behälter für einen nachfolgenden Produktionsschritt vermessen und dessen Position im Produktstrom bestimmt werden.

Die Lichtschranken umfassen vorzugsweise zueinander parallel ausgerichtete Messstrahlen. Diese verlaufen vorzugsweise quer zur Transportrichtung des zugeordneten Fördermittels. Aufgrund der getrennten Ansteuerbarkeit der Lichtquellen müssen nur diejenigen Lichtquellen betrieben und nur die jeweils zugehörigen Ausgangssignale der jeweils betriebenen Lichtschranken ausgewertet werden, die für eine bestimmte Messaufgabe, beispielsweise eine Positionsbestimmung im Produktstrom, benötigt werden. Dadurch kann die Messdatenverarbeitung schneller erfolgen als bei einem Triggerlichtgitter der bekannten Bauart, bei dem alle Lichtschrankenebenen gleichzeitig angesteuert und ihre Ausgangssignale jeweils ausgewertet werden. Es lassen sich somit bezüglich einer bestimmten Messaufgabe optimierte Kombinationen einzelner Lichtschranken realisieren. Beispielsweise könnte in einem Bereich des Lichtgitters, indem nur eine geringe vertikale Auflösung benötigt wird, nur jede zweite oder dritte Lichtquelle ansteuert werden.

Vorzugsweise ist die Triggereinheit zur selektiven Verarbeitung einzelner der Ausgangssignale ausgebildet, insbesondere um nur Ausgangssignale von denjenigen Lichtschranken zu verarbeiten, deren Lichtquellen angesteuert sind. Dadurch kann die für die Ausgabe von Triggersignalen benötigte Verarbeitungszeit an die jeweilige Messaufgabe angepasst und insbesondere minimiert werden. Es können insbesondere auch mehrere Messaufgaben gleichzeitig gelöst werden, indem Lichtschranken in unterschiedlichen Höhenbereichen des Triggerlichtgitters gruppenweise angesteuert und ihre Ausgangssignale gruppenweise ausgelesen und/oder verarbeitet werden. Hierbei lässt sich die Anzahl der für eine Messaufgabe benötigten Lichtschranken und ihre Auflösung mit größtmöglicher Flexibilität ohne mechanisches Verstellen anpassen.

Bei einer besonders günstigen Ausführungsform der erfindungsgemäßen Triggereinheit können die Ausgangssignale ausgewählter Lichtschranken periodisch innerhalb von Messzyklen mit jeweils höchstens einer Millisekunde Dauer gemeinsam ausgewertet werden, insbesondere, um einem einzelnen Behälter jeweils wenigstens ein individuelles Steuersignal zuzuordnen. Somit kann ein Steuersignal, beispielsweise in Form einer geeigneten Triggerflanke, innerhalb von einer Millisekunde nach Abschwächung oder Unterbrechung des Triggerlichtgitters ausgegeben werden. Dies ermöglicht eine ausreichend hohe Reaktionsgeschwindigkeit des Triggerlichtgitters auch bei den in Abfüllanlagen üblichen Transportgeschwindigkeiten für Behälter. Unter einem einzelnen Behälter zugeordneten Steuersignal ist ein Steuersignal zu verstehen, das eine gezielte Steuerung eines nachfolgenden Produktionsschritts, eines Inspektionsschritts und/oder einer gezielten Weiterleitung oder Ausleitung des Behälters bezüglich des Produktstroms ermöglicht. Das Steuersignal kann charakteristische Information zur Position und/oder Größe des Behälters umfassen und/oder Information zur ordnungsgemäßen order nicht ordnungsgemäßen Ausrichtung des Behälters bezüglich des Produktstroms. Das Steuersignal ist insbesondere ein Schaltsignal oder Triggersignal für eine Produktionseinheit oder Transporteinheit zur Verarbeitung, Inspektion und/oder dem Befüllen der Behälter. Das Steuersignal kann sowohl als Digitalsignal ausgegeben werden als auch über einen echtzeitfähigen Bus, bei dem das Steuersignal innerhalb einer Millisekunde an die jeweilige Zieladresse zum Auslösen einer Aktion übertragen werden kann.

Die Ausgangssignale der Lichtschranken können jeweils einzeln in logisch verwertbare Messsignale gewandelt werden. Unter einem logisch auswertbaren Signal ist beispielsweise ein Zustandssignal zu verstehen, das nach Vergleich der Ausgangssignale mit Schwellenwerten oder dergleichen angibt, ob eine zulässige Lichtabschwächung im Bereich einer Lichtschranke überschritten wurde oder nicht.

Vorzugsweise ist die Triggereinheit ausgebildet, die Ausgangssignale ausgewählter Lichtschranken gruppenweise auszuwerten und/oder logisch zu verknüpfen, oder wenigstens zwei einem einzelnen Behälter zugeordnete Steuersignale zu erzeugen. Damit lassen sich unterschiedliche Messungen innerhalb eines einzelnen Messzyklus kombinieren. Beispielsweise kann eine erste Messung mit einer ersten Lichtschrankengruppe erfolgen und gleichzeitig eine zweite Messung mit einer zweiten Messschrankengruppe. Die Ergebnisse der Lichtschrankengruppen können unabhängig voneinander ausgewertet und/oder miteinander verglichen werden. Hierdurch lässt sich beispielsweise eine Plausibilitätskontrolle durchführen oder zusätzliche Information durch Kombination der Messergebnisse erzielen. Beispielsweise lässt sich durch Vergleichen einer Lichtabschwächung in einem Bereich des Behälterbodens und einem Bereich der Behältermündung feststellen, ob ein Behälter aufrecht steht oder in einer liegenden oder schräg gestellten Position transportiert wird. Ebenso lässt sich gleichzeitig eine Position des Behälters, insbesondere bezogen auf eine Behälterhauptachse, ermitteln und gleichzeitig ein charakteristische Behälterabmessung, beispielsweise ein maximaler Durchmesser, ermitteln.

Einzelne Messaufgaben können beliebig durch Gruppenbildung der angesteuerten Lichtschranken kombiniert werden. Auch kann die Auflösung in einzelnen Lichtschrankengruppen in Abhängigkeit von der zu lösenden Messaufgabe gezielt angepasst werden. Es können weiterhin sämtliche Lichtschranken des Triggerlichtgitters gemeinsam genutzt werden, sämtliche Lichtschrankenebenen des Triggerlichtgitters auf Gruppen verteilt werden, oder nur ausgewählte Lichtschranken des Triggerlichtgitters für eine oder mehrere Messaufgaben in geeigneter Weise gruppiert werden. Hierbei lässt sich die für eine bestimmte Messaufgabe benötigte Anzahl an Lichtschranken und damit auch die Reaktionszeit des Triggerlichtgitters minimieren.

Bei einer besonders günstigen Ausführungsform des erfindungsgemäßen Triggerlichtgitters beträgt der Abstand zwischen benachbarten Lichtquellen höchstens 10 mm, insbesondere höchstens 5 mm. Damit lassen sich auch besonders kritische Behälterabschnitte, wie beispielsweise Halsbereiche von Konservengläsern, mit ausreichender örtlicher Auflösung vermessen. Dies wird insbesondere durch das Zusammenfassen mehrerer Lichtschranken in einem gemeinsamen Gehäuse ermöglicht. Das gemeinsame Gehäuse ermöglicht eine besonders dichte Staffelung einzelner Lichtschrankenebenen. Der Höchstabstand ist jeweils zwischen den optischen Mittelachsen der Lichtquellen definiert. Geeignete Lichtquellen sind beispielsweise LED.

Vorzugsweise umfasst das Triggerlichtgitter wenigstens einen Reflektor, um von den Lichtquellen ausgesandte Messstrahlen in Richtung des gemeinsamen Gehäuses umzukehren. Dadurch lassen sich aktive Komponenten, beispielsweise sowohl die Lichtquellen als auch zugeordnete Lichtempfänger, in einem gemeinsamen Gehäuse kompakt unterbringen. Dies reduziert den Aufwand für die Verkabelung und zugehörige Steckverbindungen. Außerdem lassen sich die Messstrahlen aufgrund der Strahlumkehr zweimal durch das Messfeld im Bereich der Förderstrecke leiten. Dadurch lässt sich die Messempfindlichkeit und/oder die Auslösesicherheit des Triggerlichtgitters beim Durchleiten von Behältern mit geringer Strahlabschwächung verbessern. Denkbar ist jedoch auch eine Anordnung, bei der die Lichtquellen in einem ersten gemeinsamen Gehäuse untergebracht sind und zugeordnete Lichtempfänger in einem zweiten gemeinsamen Gehäuse. In diesem Fall ist es auch möglich, die Lichtquellen und die Lichtempfänger auf unterschiedlichen Seiten der Förderstrecke anzuordnen, so dass das Messfeld im Bereich der Förderstrecke von den Messstrahlen nur einmal durchlaufen wird.

Vorzugsweise ist die Triggereinheit ausgebildet, ein Steuersignal zu erzeugen, falls wenigstens eines der Ausgangssignale einer Lichtabschwächung von wenigstens 5%, insbesondere von wenigstens 25%, in der zugeordneten Lichtschranke entspricht. Dies ermöglicht die Erkennung transparenter Medien. Da die Messstrahlen üblicherweise bei jedem Grenzflächenübergang der Messstrahlen von Luft in die Behälterwand und umgekehrt um mehrere Prozent abgeschwächt werden, lässt ist die Vermessung transparenter Behälter mit großer Zuverlässigkeit möglich, insbesondere bei Gruppierung mehrerer Lichtschrankenebenen.

Vorzugsweise sind die Lichtquellen in der Transportrichtung der Behälter versetzt vorgesehen. Beispielsweise könnte die Messauflösung in vertikaler Richtung dadurch erhöht werden, dass jede zweite Lichtquelle in seitlicher Richtung versetzt ist. Hierbei ist es auch denkbar, dass die Lichtquellen nur in einem speziell dafür vorgesehenen Höhenbereich versetzt zueinander vorgesehen sind.

Die erfindungsgemäße Aufgabe wird ferner gelöst mit einem Verfahren zum Erfassen der Position von Behältern und/oder zur Kontrolle ihrer Ausrichtung auf einer Förderstrecke, gemäß Anspruch 9. Durch selektives Ansteuern einzelner Lichtschranken und Auswerten der zugehörigen Ausgangssignale können unterschiedliche Messaufgaben gelöst werden und/oder bestimmte Messaufgaben an unterschiedliche Behältertypen angepasst werden, in dem die Lichtabschwächung in vorgegebenen Höhenbereichen der Förderstrecke ermittelt wird. Ferner ermöglicht der Vergleich der ermittelten Lichtabschwächung mit wenigstens einem Vergleichswert das Erzeugen von Steuersignalen, um einzelne Behälter gezielt auf Grundlage des Vergleichs zu steuern. Dies ermöglicht sowohl eine flexible Produktsteuerung bei sortenreiner Förderung als auch bei nicht-sortenreiner Förderung. Insbesondere entfällt der Bedarf für ein mechanisches Verstellen unterschiedlicher Lichtschrankenebenen, um Triggersignale für wechselnde Messaufgaben und/oder wechselnde Behältertypen zu erzeugen.

Vorzugsweise wird der Höhenbereich in Abhängigkeit von einem geförderten Behältertyp vorgegeben. Beispielsweise können Messbereiche zur Positionsbestimmung eines Behälters, zur Bestimmung des Durchmessers und/oder zur Überprüfung einer korrekten Förderlage, insbesondere bei sortenreiner Förderung an den jeweiligen Behältertyp angepasst werden und die für das Auslösen eines Triggersignals benötigte Zeit minimiert werden. Es könnten jedoch auch, insbesondere bei nicht sortenreiner Förderung, mehrere Höhenbereiche gleichzeitig vermessen und aus den Ausgangssignalen der jeweiligen Höhenbereiche eine automatische Erkennungsfunktion abgeleitet werden. Beispielsweise könnte ein Behälter durch Vergleich der Ausgangssignale mehrerer Lichtschrankengruppen identifiziert und gleichzeitig vermessen werden.

Vorzugsweise werden Werte der Lichtabschwächung in wenigstens zwei Höhenbereichen verglichen und/oder logisch miteinander verarbeitet, um einen Behältertyp zu ermitteln und/oder eine korrekte Förderlage von einer inkorrekten Förderlage zu unterscheiden. Ebenso lassen Plausibilitätskontrollen durch Vergleich der Ausgangswerte unterschiedlicher Höhenbereiche durchführen. Eine korrekte Förderlage ist beispielsweise bei einem aufrecht stehenden Behälter gegeben. Inkorrekte Förderlagen können beispielsweise bei einer liegenden oder schräg gestellten Behälterposition gegeben sein.

Vorzugsweise werden Zeitpunkte der Unterbrechung und Freigabe der Lichtschranken in wenigstens zwei Höhenbereichen gemessen und miteinander verrechnet, um die Position eines Bezugspunkts, einer Bezugsfläche und/oder der Hauptachse der Behälter zu ermitteln. Dies ermöglicht eine Lokalisierung von Symmetrieachsen der Behälter und dergleichen auch bei einer Messung an schräg stehenen Behälterbereichen. Beispielsweise könnten zeitlich versetzte Messergebnisse interpoliert werden, um die Genauigkeit einer zentrischen Triggerung bei schräg stehenden Behälterwänden zu verbessern.

Bei einer besonders günstigen Ausgestaltung des erfindungsgemäßen Verfahrens werden die Ausgangssignale in Höhenbereichen zugeordneten Gruppen ausgewertet, um wenigstens zwei der folgenden Kenngrößen des Behälters mittels Lichtabschwächung in unterschiedlichen Höhenbereichen zu ermitteln: Höhe; Position im Produktstrom; charakteristische Kontur; Außendurchmesser; und aufrechte/liegende Förderposition. Es können somit innerhalb eines einzelnen Messzyklus mehrere und/oder komplexe Messaufgaben gelöst werden. Durch gezieltes Ansteuern der Lichtschranken der jeweiligen Höhenbereiche können die Messsignale für die jeweiligen Messaufgaben optimiert, die Messsignale in besonders kurzer Zeit ausgewertet und die zugehörigen Triggersignale in besonders kurzer Zeit ausgelöst werden.

Vorzugsweise wird das Steuersignal ferner auf Grundlage eines für die Förderstrecke charakteristisch gemessenen Weginkrements erzeugt, insbesondere zur Ermittlung einer Behälterposition und/oder eines Behälterdurchmessers. Dies ermöglicht eine besonders schnelle und flexible Ermittlung von behältertypischen Parametern.

Günstige Ausführungsformen der Erfindung sind in der Zeichnung dargestellt. Es zeigen:
- Fig. 1: einen Querschnitt durch eine erste Ausführungsform des erfindungsgemäßen Triggerlichtgitters;
- Fig. 2: eine Draufsicht auf eine Lichtschranke des Triggerlichtgitters aus der Fig. 1;
- Fig. 3: einen Längsschnitt durch das Triggerlichtgitter aus der Fig. 1;
- Fig. 4: einen Längsschnitt durch eine zweite Ausführungsform des erfindungsgemäßen Triggerlichtgitters; und
- Fig. 5: einen Querschnitt durch eine dritte Ausführungsform des erfindungsgemäßen Triggerlichtgitters.

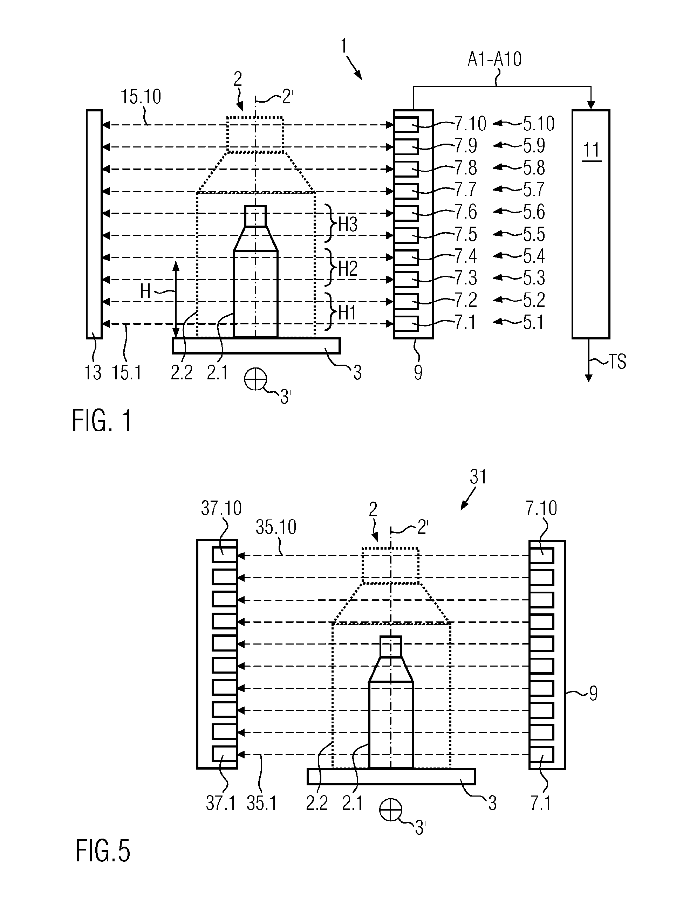

Wie die Fig. 1 erkennen lässt, umfasst die erste Ausführungsform 1 des erfindungsgemäßen Triggerlichtgitters zum Erfassen der Position P von Behältern 2 und/oder zur Kontrolle ihrer Ausrichtung auf einer Förderstrecke 3 mehrere bezüglich der Förderstrecke 3 auf unterschiedlichen Höhenniveaus H angeordneten Lichtschranken 5.1 bis 5.10, die jeweils Lichtquellen 7.1 bis 7.10 umfassen. Diese bilden die jeweiligen Lichtsender der Lichtschranken 5.1 bis 5.10 aus und sind in einem gemeinsamen Gehäuse 9 untergebracht.

Die Lichtquellen 7.1 bis 7.10 sind einzeln ansteuerbar und mit einer Triggereinheit 11 zum Erzeugen von Triggersignalen TS, nachfolgend auch Steuersignale genannt, auf Grundlage von Ausgangssignalen A1 bis A10 der Lichtschranken 5.1 bis 5.10 verbunden.

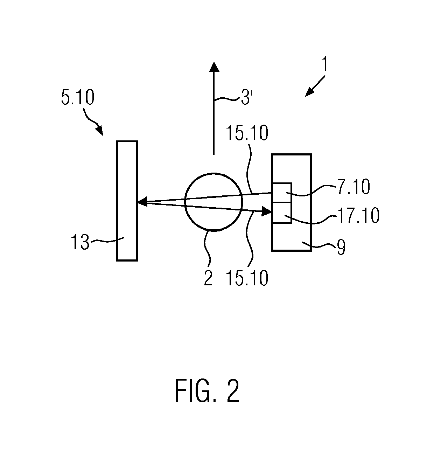

Ein kontinuierlicher Strom aus Behältern 2 bewegt sich auf der Förderstrecke 3, die beispielsweise ein Förderband oder ein rotierender Transporteur ist, entlang der Transportrichtung 3' im Beispiel der Fig. 1 in die Zeichenebene hinein. Demnach sind die Lichtquellen 7.1 bis 7.10 im Wesentlichen quer und insbesondere orthogonal zur Transportrichtung 3' ausgerichtet. Die Lichtschranken 5.1 bis 5.10 arbeiten bei der ersten Ausführungsform 1 nach dem Reflexionsprinzip. Demnach ist den Lichtquellen 7.1 bis 7.10 gegenüberliegend ein Reflektor 13 vorgesehen, um von den Lichtquellen 7.1 bis 7.10 ausgesandte Messstrahlen 15.1 bis 15.10 in Richtung des Gehäuses 9 zurück zu reflektieren, so dass diese einen Messbereich über der Förderstrecke 3 zweimal durchlaufen. Dies ist in der Fig. 2 schematisch anhand des obersten Messstrahls 15.10 der zugehörigen Lichtschranke 5.10 angedeutet.

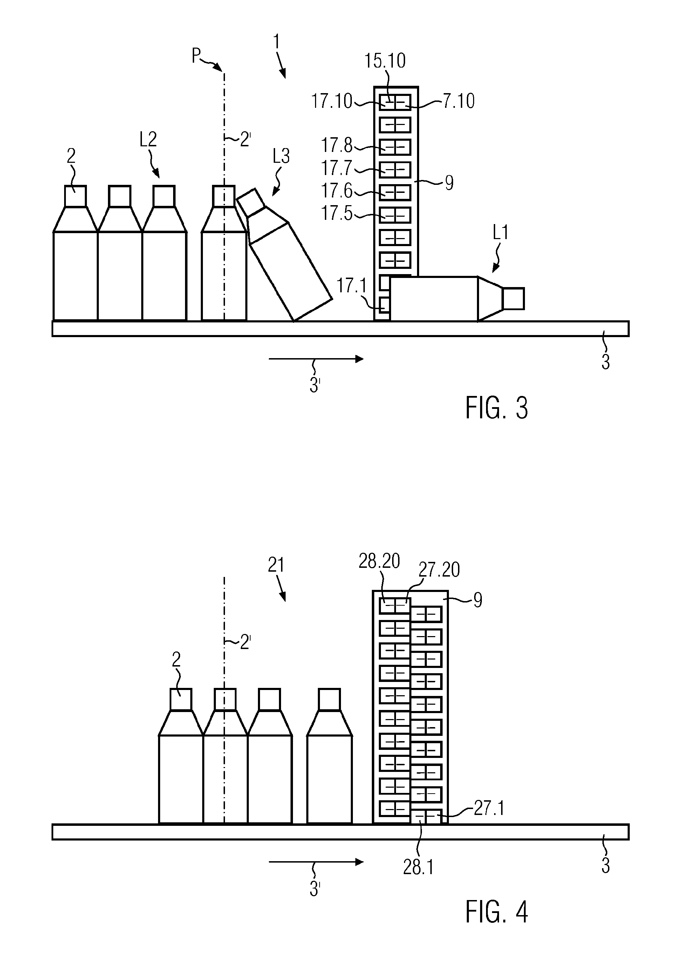

Wie die Fig. 2 und 3 erkennen lassen, sind in dem Gehäuse 9 ferner den Lichtquellen 7.1 bis 7.10 zugeordnete Lichtempfänger 17.1 bis 17.10 vorgesehen. Diese sind ebenfalls mit der Triggereinheit 11 verbunden, so dass eine beliebige Auswahl aus den Ausgangssignalen A1 bis A10 jeweils innerhalb gemeinsamer Messzyklen an die Triggereinheit 11 übertragen werden kann.

Im gezeigten Beispiel der Fig. 1 werden bei sortenreiner Verarbeitung eines ersten Behältertyps 2.1 lediglich die unteren Lichtquellen 7.1 bis 7.6 angesteuert und lediglich die Ausgangssignale der Lichtempfänger 17.1 bis 17.6 ausgelesen und von der Triggereinheit 11 ausgewertet. Dagegen liegen die oberen Lichtquellen 7.7 bis 7.10 und die zugehörigen Lichtempfänger 17.7 bis 17.10 in Messbereichen oberhalb der zu erfassenden Behälter 2 des ersten Behältertyps 2.1. Somit ist von den oberen Lichtschranken 5.7 bis 5.10 kein für die Erfassung dieses Behältertyps 2.1 nutzbarer Signalanteil zu erwarten. Es werden daher vorzugsweise nur die unteren Lichtquellen 7.1 bis 7.6 selektiv angesteuert. Dies schließt eine optionale Ansteuerung weiterer Lichtquellen jedoch nicht aus.

Bei sortenreiner Verarbeitung eines zweiten, gestrichelt angedeuteten Behältertyps 2.2 werden beispielsweise nur die Lichtquellen 7.1, 7.5, 7.8 und 7.10 angesteuert und die zugehörigen Lichtempfänger 17.1, 17.5, 17.8 und 17.10 ausgelesen.

Bei nicht-sortenreiner Verarbeitung könnten beispielsweise alle Lichtschranken 5.1 bis 5.10 betrieben werden. Der Vorteil des erfindungsgemäßen Triggerlichtgitters 1 liegt jedoch gerade darin, dass auch andere Kombinationen angesteuerter und nicht angesteuerter oder ausgelesener Lichtschranken 5.1 bis 5.10 je nach Bedarf ohne mechanisches Verstellen und mit vergleichsweise hoher Messauflösung möglich sind.

Ein Messzyklus zum Auslesen und Auswerten aller zur Auswertung benötigter Ausgangssignale A1 bis A10 dauert beispielsweise 0,2 bis 2 ms. Besonders vorteilhaft ist ein Bereich von nicht mehr als 1 ms. Innerhalb dieser Gesamtzyklusdauer lassen sich einerseits die Positionen P einzelner Behälter 2 absolut oder bezüglich der Förderstrecke 3 auch bei den in Abfüllanlagen üblichen Transportgeschwindigkeiten noch mit ausreichender Genauigkeit ermitteln. Andererseits lässt sich innerhalb dieser Zyklusdauer auch eine ausreichende Anzahl von Ausgangssignalen A1 bis A10 der Lichtempfänger 17.1 bis 17.10 auslesen und gemeinsam auswerten. Innerhalb der bevorzugten Zyklusdauer können beispielsweise unterschiedliche Messaufgaben durch Ansteuern ausgewählter Lichtschranken 5.1 bis 5.10 nebeneinander ausgeführt werden. Ebenso könnte eine bestimmte Messaufgabe mit größtmöglicher Genauigkeit, insbesondere mit besonders guter Messauflösung, gelöst werden. Einzelne Lichtschranken 5.1 bis 5.10 können beispielsweise nacheinander ausgelesen werden, wobei innerhalb der Gesamtzyklusdauer des Triggerlichtgitters 1 dann beispielsweise bis zu 128 Lichtschranken 5.1 bis 5.10 gemeinsam ausgelesen und ausgewertet werden könnten.

Vorzugsweise wird innerhalb der gesamten Zyklusdauer von nicht mehr als einer 1 ms ein geeignetes Triggersignal TS, beispielsweise in Form einer geeigneten Triggerflanke ausgegeben. Damit lässt sich ein nachfolgender Produktionsschritt, wie beispielsweise eine Weiterleitung, Weiterverarbeitung oder Inspektion des jeweiligen Behälters 2 individuell steuern.

Die Ausgangssignale A1 bis A10 der einzeln angesteuerten Lichtschranken 5.1 bis 5.10 können in beliebiger Weise ausgewählt, miteinander verrechnet und/oder logisch verknüpft werden. Dadurch lässt sich eine Triggerfunktion gezielt aus besonders geeigneten Höhenbereichen H1 bis H3 des Triggerlichtgitters 1 ableiten. Denkbar ist beispielsweise eine sogenannte Verorderung von Messsignalen, also dass ein Triggersignal TS erzeugt wird, sobald der Messstrahl einer einzelnen Lichtschranke unterbrochen wird, die zu einer für eine bestimmte Messaufgabe gebildeten Gruppe von Lichtschranken gehört, beispielsweise die Lichtschranke 5.1 oder 5.2 zur Vermessung eines unteren Höhenbereichs H1.

Eine weitere mögliche Signalverknüpfung ist die sogenannte Verrundung, bei der alle Messstrahlen einer Gruppe von Lichtschranken, beispielsweise die Lichtschranken 5.1 und 5.2 des untersten Höhenbereichs H1, unterbrochen werden müssen, um ein Triggersignal TS auszulösen. Dadurch lässt sich die Wahrscheinlichkeit von Fehltriggerungen reduzieren. Ebenso kann eine derartige Verrundung dazu genutzt werden, um Störeinflüsse von Objekten, die beispielsweise von dem Behälter 2 abstehen können, zu reduzieren. Es müssten dann beispielsweise alle Messstrahlen 15.1 bis 15.4 einer Gruppe von Lichtschranken 5.1 bis 5.4 unterbrochen werden, deren Messbereich in vertikaler Richtung größer ist als das größte zu erwartende Störobjekt, das beispielsweise ein abstehendes Etikett sein könnte. Ebenso könnten Bügelverschlüsse oder Strohhalme auf diese Weise erkannt und/oder von der Triggerung ausgeschlossen werden. Zum Vermeiden von Fehltriggerungen könnte auch eine bestimmten Mindestanzahl zu unterbrechender Messstrahlen 15.1 bis 15.4 innerhalb einer vorgegebenen Gruppe von Lichtschranken 5.1 bis 5.4 vorgegeben werden, wie beispielhaft für angedeuteten Höhenbereiche H1 und H2.

Die Verarbeitung der Ausgangssignale A1 bis A10 der Lichtempfänger 17.1 bis 17.10 umfasst somit vorzugsweise eine logische Verknüpfung, um die Gefahr von Fehltriggerungen zu reduzieren und/oder spezifische Messaufgaben zu lösen. Dies könnte beispielsweise auch die Erfassung einer Drehlage von Behältern mit asymmetrischem Querschnitt sein. Beispiel hierfür wäre ein einseitiger Griffdurchbruch (nicht gezeigt) im Behälter, der im Vergleich zu im Querschnitt symmetrisch geformten Behälterbereichen charakteristische Lichtabschwächung in bestimmten Lichtschrankenebenen verursachen würde.

Alternativ oder ergänzend zu einer logischen Verknüpfung von Ausgangssignalen A1 bis A10 einzelner Lichtempfänger 17.1 bis 17.10 wäre auch das Erzeugen von wenigstens zwei Triggersignalen aus unterschiedlichen Höhenbereichen H1 bis H3 des Triggerlichtgitters 1. Dies kann beispielsweise dann von Vorteil sein, wenn bestimmte Lichtschranken 5.1 bis 5.10 des Triggerlichtgitters 1 einer Messaufgabe fest zugeordnet werden können und/oder eine parallele Verarbeitung mehrerer einzelner Triggersignale TS schneller ist als die Verarbeitung und/oder Verknüpfung einer Vielzahl benötigter Ausgangssignale A1 bis A10 zu einem einzigen Triggersignal TS. Generell ermöglicht jedoch eine selektive Nutzung einzelner Lichtschranken 5.1 bis 5.10, also die selektive Ansteuerung der zugehörigen Lichtquellen 7.1 bis 7.10 und/oder das selektive Auslesen der von den zugehörigen Lichtempfängern 17.1 bis 17.10 gelieferten Ausgangssignalen A1 bis A10, eine besonders vielseitige Erfassung der Position P, der Größe und/oder der Orientierung der Behälter 2. Ebenso können unterschiedliche Höhenbereiche H1 bis H3 des Triggerlichtgitters 1 für unterschiedliche Messaufgaben verwendet werden.

Eine weitere Möglichkeit zur logischen Verknüpfung von Ausgangssignalen A1 bis A10 einzelner Lichtschranken 5.1 bis 5.10 ist in der Fig. 3 angedeutet. Diese zeigt einen Behälter 2 in einer liegenden, nicht ordnungsgemäßen Transportlage L1. In diesem Fall könnte beispielsweise mit Hilfe einer ersten Gruppe umfassend die unteren Lichtschranken 5.1 und 5.2 aus den zugehörigen Ausgangssignalen A1 und A2 ein erstes gemeinsames Auswertungsergebnis abgeleitet werden und mit Hilfe der darüber befindlichen Lichtschranken 5.3 bis 5.6 aus den zugehörigen Ausgangssignalen A3 bis A6 ein zweites Auswertungsergebnis, das mit dem ersten Auswertungsergebnis verrechnet oder verglichen werden kann. Wird beispielsweise im ersten Auswertungsergebnis eine relevante Lichtabschwächung festgestellt, nicht jedoch im zweiten Auswertungsergebnis, so kann auf einen liegenden Behälter 2 geschlossen werden. Demgegenüber müssten bei einem in einer ordnungsgemäßen Lage L2 stehend transportierten Behälter 2 sowohl im ersten als auch im zweiten Auswertungsergebnis eine relevante Lichtabschwächung festgestellt werden.

Bei einem nicht-sortenreinen Transport, der in der Fig. 1 mit Hilfe der beiden unterschiedlich großen Behältertypen 2.1 und 2.2 angedeutet ist, könnten beispielsweise alle Lichtschranken 5.1 bis 5.10 gleichzeitig angesteuert werden, und jeweils getrennt ausgewertet werden. Beispielsweise könnte der erste Behältertyp 2.1 daran erkannt werden, dass oberhalb der Lichtschranke 5.6 keine relevante Abschwächung registriert wird, von der Lichtschranke 5.6 dagegen schon. Eine Behälterposition P bezüglich des Produktstroms könnte dann beispielsweise jeweils anhand der obersten gerade noch abgedunkelten Lichtschranke 5.6 erfasst werden.

Zur Bestimmung einer Behälterposition P im laufenden Produktstrom kann es außerdem vorteilhaft sein, wenigstens eines der gemessenen Ausgangssignale A1 bis A10 der Lichtempfänger 17.1 bis 17.10 mit einem Weginkrementsignal der Förderstrecke 3 zu vergleichen oder zu verrechnen. Beispielsweise könnte ein Triggersignal TS verzögert bereitgestellt werden, um den Triggerzeitpunkt mit der Position der Behälterhauptachse 2' zu synchronisieren. Beispielsweise kann damit eine Ausleitfunktion bezüglich der Behälterhauptachse 2' eingestellt werden. Dies wäre insbesondere bei einem nicht-sortenreinen Transport nützlich.

Die Lichtschranken 5.1 bis 5.10 sind vorzugsweise orthogonal zur Transportrichtung 3' und zur Hauptachse 2' der Behälter 2 bei ordnungsgemäßer Behälterlage L2 ausgerichtet. Das erfindungsgemäße Triggerlichtgitter 1 ist jedoch nicht auf eine derartige orthogonale Ausrichtung beschränkt. Bei der Reflexionsanordnung der ersten Ausführungsform ergibt sich außerdem aus dem nebeneinander liegenden Lichtquellen 7.1 bis 7.10 und den Lichtempfängern 17.1 bis 17.10 zwangsläufig ein geringfügiges Verkippen der Messstrahlen 15.1 bis 15.10 vor der Reflexion gegenüber dem Strahlverlauf nach der Reflexion, wie in der Fig. 2 angedeutet ist. Nicht unterbrochene Messstrahlen sind in der Fig. 3 und 4 daher jeweils durch eine horizontale Verbindungslinie zwischen Lichtquelle und Empfänger angedeutet.

Der von den Lichtschranken 5.1 bis 5.10 abgedeckte Messbereich hat vorzugsweise eine vertikale Ausdehnung von 100 mm bis 500 mm. Damit lassen sich die meisten gängigen Behältertypen erfassen. Besonders vorteilhaft ist ein Messbereich von 200 mm bis 400 mm Höhe. Die Abstände zwischen benachbarten Lichtschranken 5.1 bis 5.10 betragen vorzugsweise nicht mehr als 10 mm, insbesondere nicht mehr als 5 mm, jeweils gemessen zwischen den optischen Achsen der Messstrahlen 15.1 bis 15.10.

Die Anzahl der dargestellten Lichtschranken 5.1 bis 5.10 ist lediglich beispielhaft. Prinzipiell könnte eine beliebige Anzahl von selektiv ansteuerbaren Lichtschranken zu einem erfindungsgemäßen Triggerlichtgitter kombiniert werden. Besonders praktikabel sind je nach Bedarf Triggerlichtgitter mit wenigstens 16 oder wenigstens 32 selektiv ansteuerbaren Lichtquellen. Für eine Verbesserung der Flexibilität hinsichtlich unterschiedlicher Messbereiche und/oder Behältertypen sind zeilenartige Anordnungen mit wenigstens 64, insbesondere wenigstens 128 selektiv ansteuerbaren Lichtquellen oder Lichtschranken besonders geeignet.

Die Fig. 4 zeigt eine zweite Ausführungsform 21 des erfindungsgemäßen Triggerlichtgitters, bei dem die Lichtquellen 27.1 bis 27.20 in Transportrichtung 3' versetzt zueinander vorgesehen sind. Dies kann beispielsweise dann von Vorteil sein, wenn die vertikale Auflösung der zugehörigen Lichtschranken kleiner sein soll als die vertikalen Abmessungen einzelner Lichtquellen 27.1 bis 27.20. Den als Sender wirkenden Lichtquellen sind, wie bei der ersten Ausführungsform Lichtempfänger 28.1 bis 28.20 zugeordnet.

Die Fig. 5 zeigt eine dritte Ausführungsform 31 des erfindungsgemäßen Triggerlichtgitters, bei der die Lichtquellen 7.1 bis 7.10 und die Lichtempfänger 37.1 bis 37.10 einander gegenüberliegend auf unterschiedlichen Seiten der Transportstrecke 3 vorgesehen sind. Mit dieser Ausführungsform 31 lassen sich grundsätzlich die gleichen Vorteile erzielen, wie mit der ersten Ausführungsform 1 gemäß dem Reflexionsprinzip. Allerdings werden die zugehörigen Messstrahlen 35.1 bis 35.10 bei der dritten Ausführungsform durch die Behälter 2 weniger stark abgeschwächt, als beispielsweise bei der ersten Ausführungsform 1. Dementsprechend eignet sich die erste Ausführungsform 1 besser für transparente Behälter 2 mit geringer Lichtabschwächung. Außerdem wird eine besonders kompakte Bauweise ermöglicht. Die Triggereinheit 11 ist der Übersichtlichkeit halber in den Fig. 2 bis 5 nicht dargestellt.

Mit den beschriebenen Ausführungsformen 1, 21 und 31, die sich auch beliebig in technisch sinnvoller Weise kombinieren lassen, können die folgenden Verbesserungen gegenüber dem bekannten Stand der Technik erzielt werden. Eine mechanische Verstellung einzelner Lichtschranken in Abhängigkeit von der jeweils zu erfassenden Behältergröße ist entbehrlich. Stattdessen ist eine starre Befestigung des erfindungsgemäßen Triggerlichtgitters möglich. Dies verbessert die mechanische Stabilität des Triggerlichtgitters verbessert die Reproduzierbarkeit einzelner Messungen. Produktionswechsel zwischen unterschiedlichen Behältertypen lassen sich schneller und flexibler durchführen. Die Reproduzierbarkeit der einzelnen Messungen ist auch nach wiederholter Umstellung auf wechselnde Behältertypen gegeben. Mechanischer Verschleiß aufgrund von Umstellungen auf unterschiedliche Behältertypen kann vermieden werden. Durch die Integration mehrerer Lichtquellen innerhalb eines gemeinsamen Gehäuses kann der Verdrahtungsaufwand minimiert werden. Der Platzbedarf ist gegenüber einer mechanischen Höhenverstellung deutlich reduziert. Ebenso kann die Verkabelung in einem Bereich oberhalb des Transporteurs minimiert werden, wodurch Maßnahmen zum Schutz der Verkabelung gegen Glasbruch reduziert oder vermieden werden können. Durch Verwendung herkömmlicher Feldbusschnittstellen, wie beispielsweise CANopen, lassen sich vielfältige Diagnosefunktionen und ein softwaregesteuerter Lernmodus implementieren. Besonders geeignet ist ein echtzeitfähiger Bus mit einer Übertragungszeit von höchstens 1 ms. Durch vielfältige Möglichkeiten der logischen Verknüpfung der Ausgangssignale oder Messergebnisse einzelner Lichtschranken können unterschiedlichste Behältereigenschaften, aber auch partielle Verschmutzung und dergleichen, bei erhöhter Verlässlichkeit der Triggerung und Absicherung gegen Fehltriggerung erkannt werden. Die Integration von Lichtquellen und Lichtempfängern in einem gemeinsamen Gehäuse erleichtern die Reinigung und das Einhalten hygienischer Anforderungen.

Die Arbeitsweise des erfindungsgemäßen Triggerlichtgitters wird beispielhaft anhand der ersten Ausführungsform 1 für einen sortenreinen Produktstrom beschrieben:

Aufrecht stehende Behälter 2 des Behältertyps 2.1 werden kontinuierlich auf der Förderstrecke 3 durch das Triggerlichtgitter 1 gefahren. Die Lichtschranken 5.1 bis 5.4 und 5.6 werden selektiv angesteuert. Die Ausgangssignale der zugehörigen Lichtempfänger 17.1 bis 17.4 und 17.6 werden selektiv ausgelesen und für die Auswertung in der Triggereinheit 11 wie folgt in Gruppen zusammengefasst. Eine erste Gruppe wird aus den unteren Lichtschranken 5.1 und 5.2 gebildet. Eine zweite Gruppe wird aus den mittleren Lichtschranken 5.3 und 5.4 gebildet. Die Lichtschranken 5.7 bis 5.10 liegen in Bereichen oberhalb des Behälters 2 und werden daher für die Vermessung der Behälter 2 nicht benötigt. Die Lichtschranke 5.5 im Bereich der Behälterschulter wird im Beispiel ebenfalls nicht benötigt und deshalb nicht angesteuert.

Die unteren Lichtschranken 5.1 und 5.2 liefern Ausgangssignale A1 und A2, um das Vorhandensein eines Behälters 2 auf der Förderstrecke 3 unabhängig von seiner Orientierung auf der Förderstrecke 3 zu erfassen. Anders gesagt, verursacht der Behälter 2 sowohl in einer aufrecht stehenden Position L2, in einer schräg stehenden Position L3 als auch in einer liegenden Position L1 zu einer relevanten Lichtabschwächung im Bereich der unteren Lichtschranken 5.1 und 5.2. Folglich kann das Vorhandensein des Behälters 2 auf der Förderstrecke 3 anhand wenigstens eines der Ausgangssignale A1 und A2 der Lichtschranken 5.1 und 5.2 ermittelt werden. Diese Ausgangssignale A1 und A2 werden jedoch vorzugsweise gemeinsam ausgewertet, beispielsweise in dem bei beiden Lichtschranken 5.1 und 5.2 eine Lichtabschwächung registriert werden muss, die über einem vorgegebenen Schwellenwert liegt.

Die Ausgangssignale A3 und A4 der mittleren Lichtschranken 5.3 und 5.4 können beispielsweise für eine Messung des Behälterdurchmessers verwendet werden. Außerdem können diese Ausgangssignale logisch mit den Ausgangssignalen A1 und A2 der unteren Lichtschranken 5.1 und 5.2 verknüpft werden, um die Orientierung des Behälters 2 auf der Förderstrecke 3 zu ermitteln. Beispielsweise kann durch Vergleich und/oder Verknüpfung der Ausgangssignale A1, A2 der ersten Lichtschrankengruppe und der Ausgangssignale A3, A4 der zweiten Lichtschrankengruppe entschieden werden, ob der Behälter 2 in einer ordnungsgemäßen Lage L2 auf der Förderstrecke 3 transportiert wird. Es lassen sich somit sowohl die Ausgangssignale A1 bis A4 der einzelnen Lichtschrankengruppen jeweils untereinander beliebig vergleichen, verrechnen und/oder logisch verknüpfen, als auch die bereits ausgewerteten Messergebnisse der Lichtschrankengruppen untereinander.

Die oberste angesteuerte Lichtschranke 5.6, die einen oberen Höhenbereich H3 abdeckt, eignet sich besonders gut zur Bestimmung der Position P des Behälters 2 als Absolutwert oder bezüglich des Produktstroms, also der Position des Behälters 2 in der Transportrichtung 3'. Beispielsweise werden Zeitpunkte der Lichtschrankenunterbrechung und der nachfolgenden Freigabe des Messstrahls 15.6 gemessen. Auch das Ausgangssignal der oberen Lichtschranke 5.6 kann mit anderen Ausgangssignalen A1 bis A4 verrechnet oder verglichen werden und/oder mit anderen Lichtschrankengruppen zugeordneten Messergebnissen logisch verknüpft werden.

Die beschriebene gruppenweise Auswertung kann vorzugsweise durch entsprechende Steuerbefehle auf Software-Ebene an geänderte Produktionsbedingungen angepasst werden, so dass vielfältige Möglichkeiten zur Nutzung beliebiger Höhenbereiche H1 bis H3 des Triggerlichtgitters 1 ohne mechanisches Verstellen bestehen.

Das Triggerlichtgitter 1 wird während des Durchlaufens des Behälter 2 kontinuierlich durch Aneinanderreihen von Messzyklen betrieben, in denen jeweils die Lichtquellen 7.1 bis 7.10 selektiv angesteuert und die zugehörigen Ausgangssignale A1 bis A10 ausgewertet werden. Innerhalb der Messzyklen wird jeweils eine Entscheidung getroffen, ob ein Triggersignal TS, das dem jeweiligen Behälter 2 zugeordnet ist, ausgegeben wird.

Ein Triggersignal TS wird beispielsweise ausgegeben, wenn ein Schwellenwert der Lichtabschwächung in wenigstens einer der Lichtschranken 5.1 bis 5.10 überschritten wird. Je nach Art der Messaufgabe, die der Ausgabe des Triggersignals TS zugrunde liegt, beispielsweise dem Ermitteln der Position des Behälters 2 im Produktstrom oder der Kontrolle einer ordnungsgemäßen Lage L2 des Behälters 2 auf der Förderstrecke 3, können Triggersignale TS zum Schalten unterschiedlicher Produktionsschritte ausgelöst werden. Das Triggersignal TS kann beispielsweise ein Schaltsignal sein zum Ausleiten des Behälters 2 aus dem Produktstrom, für den Fall, dass eine nicht ordnungsgemäße Lage L1, L3 des Behälters 2 auf der Förderstrecke 3 festgestellt wird. Das Triggersignal TS kann ebenso ein Schaltsignal sein zum Auslösen einer Inspektion oder eines nachfolgenden Produktionsschritts, für den die Position des Behälters 2 im Produktstrom bekannt sein muss.

Ebenso kann wenigstens eines der Ausgangssignale A1 bis A10 der Lichtschranken 5.1 bis 5.10 mit einem Ausgangssignal eines Weginkrementgebers der Förderstrecke 3 kombiniert werden. Dadurch können Triggersignale TS für zeitlich verzögerte Aktionen ausgelöst werden. Anders gesagt, kann nicht nur die aktuelle Position des Behälters 2 ermittelt werden, sondern auch eine zukünftige Position nach Durchlaufen eines definierten Abschnitts der Förderstrecke 3. Ebenso lassen sich der Abdunklungsdauer einzelner Lichtschranken 5.1 bis 5.10 Abmessungen in der Förderrichtung 3' zuordnen, beispielsweise um einen Durchmesser des Behälters 2 zu bestimmen.

Hierbei ist es besonders vorteilhaft, die Zeitpunkte der Unterbrechung und Freigabe der Lichtschranken 5.1 bis 5.10 in wenigstens zwei Höhenbereichen H1 bis H3 für jeden Behälter 2 getrennt zu messen und miteinander zu vergleichen und/oder zu verrechnen. Beispielsweise könnten im Halsbereich der Behälter 2 zwei derartige Messungen parallel vorgenommen werden. Wird ein zeitlicher Versatz der Unterbrechung und Freigabe der zu vergleichenden Lichtschranken registriert, so lässt dies auf einen schräg stehenden Halsbereich schließen oder auf einen bezüglich des Bodenbereichs des Behälters 2 schräg stehenden Behälterkörper. Dies kann beispielsweise je nach Herstellungstoleranz bei Kunststoffbehältern auftreten und bei herkömmlichen Triggerlichtgittern die korrekte Lokalisierung der Behälterhauptachse 2' erschweren. Demgegenüber lässt sich erfindungsgemäß eine Position und/oder Lage der Behälterhauptachse 2' oder anderer geeigneter Bezugspunkte oder Bezugsflächen, beispielsweise im Bereich des Behälterbodens, an dem Behälter 2 auch bei schräg stehenden Behältern oder Behälterabschnitten ermitteln. Anders gesagt, kann eine beabsichtigte zentrische Triggerung, also bezüglich einer Symmetrieachse der Behälter 2, auf diese Weise korrigiert werden.

Bei einem Sortenwechsel, also einer Änderung der Behältergröße, der Behälterform oder der Behältertransparenz, können die Lichtschranken 5.1 bis 5.10 durch Umprogrammierung des Triggerlichtgitters 1 selektiv angesteuert und ausgelesen werden. Es können beispielsweise beim Wechsel vom kleineren Behältertyp 2.1 zum größeren Behältertyp 2.2 zusätzliche Lichtschranken 5.7 bis 5.10 im oberen Bereich des Triggerlichtgitters 1 aktiviert werden, in dem die zugehörigen Lichtquellen 7.7 bis 7.10 selektiv angesteuert und die Ausgangssignale A7 bis A10 der zugehörigen Lichtempfänger 17.7 bis 17.10 ausgelesen werden. Rechenvorschriften für die Auswertung der Ausgangssignale und/oder logische Verknüpfungen zwischen einzelnen Ausgangssignalen oder gruppenweise ausgewerteten Ausgangssignalen lassen sich hierbei beliebig anpassen. Somit erübrigt sich ein mechanisches Verstellen des erfindungsgemäßen Triggerlichtgitters 1, 21, 31 bei einem Sortenwechsel.

Bei einem nicht-sortenreinen Produktstrom können einzelne Messbereiche des erfindungsgemäßen Triggerlichtgitters 1, 21, 31 selektiv oder gemeinsam ausgewertet werden, um Behältertypen 2.1, 2.2 zu identifizieren, zu vermessen und/oder geeignete Triggersignale TS auch unabhängig von dem jeweiligen Behältertyp 2.1, 2.2 auszulösen.

Die Merkmale der beschriebenen Ausführungsformen 1, 21, 31 können beliebig in technisch sinnvoller Weise miteinander kombiniert werden.

## Patentansprüche

1. Triggerlichtgitter zum Erfassen der Position von Behältern (2) und/oder zur Kontrolle ihrer Ausrichtung auf einer Förderstrecke (3), insbesondere bei einem im Wesentlichen aufrechten Fördern der Behälter, mit:
- mehreren bezüglich der Förderstrecke auf unterschiedlichen Höhenniveaus (H) vorgesehenen Lichtschranken (5.1 - 5.10), die getrennt voneinander ansteuerbare und in einem gemeinsamen Gehäuse (9) untergebrachte Lichtquellen (7.1 - 7.10) umfassen; und
- einer Triggereinheit (11) zum Erzeugen von Steuersignalen (TS) auf Grundlage von Ausgangssignalen (A1 - A10) der Lichtschranken.

2. Triggerlichtgitter nach Anspruch 1, wobei die Triggereinheit (11) zur selektiven Verarbeitung Einzelner der Ausgangssignale (A1 - A10) ausgebildet ist, insbesondere um nur Ausgangssignale von denjenigen Lichtschranken (5.1 - 5.10) zu verarbeiten, deren Lichtquellen (7.1 - 7.10) angesteuert sind.

3. Triggerlichtgitter nach Anspruch 1 oder 2, wobei die Triggereinheit (11) ausgebildet ist, die Ausgangssignale (A1 - A10) ausgewählter Lichtschranken (5.1 - 5.10) periodisch innerhalb von Messzyklen mit jeweils höchstens 1 ms Dauer gemeinsam auszuwerten, insbesondere um einem einzelnen Behälter (2) jeweils wenigstens ein Steuersignal (TS) zuzuordnen.

4. Triggerlichtgitter nach wenigstens einem der vorigen Ansprüche, wobei die Triggereinheit (11) ausgebildet ist, die Ausgangssignale (A1 - A10) ausgewählter Lichtschranken (7.1 bis 7.10) gruppenweise auszuwerten und/oder logisch zu verknüpfen oder wenigstens zwei einem einzelnen Behälter (2) zugeordnete Steuersignale (TS) zu erzeugen.

5. Triggerlichtgitter nach wenigstens einem der vorigen Ansprüche, wobei der Abstand zwischen benachbarten Lichtquellen (7.1 - 7.10) höchstens 10 mm beträgt, insbesondere höchstens 5 mm.

6. Triggerlichtgitter nach wenigstens einem der vorigen Ansprüche, ferner mit wenigstens einem Reflektor (13), mit dem von den Lichtquellen (7.1 - 7.10) ausgesandte Messstrahlen (15.1 - 15.10) in Richtung des Gehäuses (9) umgelenkt werden können.

7. Triggerlichtgitter nach wenigstens einem der vorigen Ansprüche, wobei die Triggereinheit (11) ausgebildet ist, ein Steuersignal (TS) zu erzeugen, falls wenigstens eines der Ausgangssignale (A1 - A10) einer Lichtabschwächung von wenigstens 5%, insbesondere von wenigstens 25%, in der zugeordneten Lichtschranke (5.1 - 5.10) entspricht.

8. Triggerlichtgitter nach wenigstens einem der vorigen Ansprüche, wobei die Lichtquellen (27.1 - 27.20) in der Transportrichtung (3') der Behälter (2) versetzt vorgesehen sind.

9. Verfahren zum Erfassen der Position (P) von Behältern (2) und/oder zur Kontrolle ihrer Ausrichtung auf einer Förderstrecke (3), mit dem Triggerlichtgitter (1, 21, 31) nach wenigstens einem der vorigen Ansprüche, und mit folgenden Schritten:
a) Fördern, insbesondere aufrechtes Fördern, der Behälter durch das Triggerlichtgitter;
b) Selektives Ansteuern einzelner Lichtschranken (7.1 - 7.10) und Auswerten der Ausgangssignale (A1 - A10), um eine Lichtabschwächung in wenigstens einem vorgegebenen Höhenbereich (H1 - H3) der Förderstrecke zu ermitteln;
c) Vergleich der ermittelten Lichtabschwächung mit wenigstens einem Vergleichswert und Erzeugen von Steuersignalen (TS), die einzelnen Behältern zugeordnet sind, auf Grundlage des Vergleichs.

10. Verfahren nach Anspruch 9, wobei der Höhenbereich (H1 - H3) in Abhängigkeit von der Größe und/oder Form eines geförderten Behältertyps (2.1, 2.2) vorgegeben wird.

11. Verfahren nach Anspruch 9 oder 10, wobei Werte der Lichtabschwächung in wenigstens zwei Höhenbereichen (H1 - H3) verglichen und/oder logisch miteinander verarbeitet werden, um einen Behältertyp (2.1, 2.2) zu identifizieren und/oder eine korrekte Förderlage (L2) der Behälter (2) von einer inkorrekten Förderlage (L1, L3) zu unterscheiden.

12. Verfahren nach Anspruch 9 oder 10, wobei Zeitpunkte der Unterbrechung und Freigabe der Lichtschranken (5.1 - 5.10) in wenigstens zwei Höhenbereichen (H1 - H3) gemessen und miteinander verrechnet werden, um die Position (P) eines Bezugspunkts, einer Bezugsfläche und/oder der Hauptachse der Behälter (2) zu ermitteln.

13. Verfahren nach wenigstens einem der Ansprüche 10 bis 12, wobei die Ausgangssignale (A1 - A10) in Höhenbereichen (H1 - H3) zugeordneten Gruppen ausgewertet werden, um wenigstens zwei der folgenden Kenngrößen des Behälters (2) mittels Lichtabschwächung in unterschiedlichen Höhenbereichen zu ermitteln: Höhe; Position (P) im Produktstrom; charakteristische Kontur; Außendurchmesser; und aufrechte/liegende Förderposition (L2, L1).

14. Verfahren nach einem der Ansprüche 10 bis 13, wobei das Steuersignal (TS) ferner auf Grundlage eines für die Förderstrecke (3) charakteristischen gemessenen Weginkrements erzeugt wird, insbesondere zur Ermittlung einer Behälterposition (P) und/oder eines Behälterdurchmessers.
